# EUROPEAN PATENT SPECIFICATION

(11) **EP 3 066 929 B1**
(45) Date of publication and mention of the grant of the patent: **23.12.2020**
(21) Application number: 14860040.6
(22) Date of filing: 10.11.2014
(51) Int. Cl.: A21C 11/24, A23L 7/109

(54) **NOODLE CUTTING MACHINE AND RAW NOODLES**
NUDELSCHNEIDMASCHINE UND ROHE NUDELN
MACHINE DE COUPE DE NOUILLES ET NOUILLES CRUES

(30) Priority: 08.11.2013 JP 2013232502
(43) Date of publication of application: 14.09.2016
(73) Proprietor: Nissin Foods Holdings Co., Ltd., Osaka-shi, Osaka 532-8524 (JP)
(72) Inventor: YATSUDA, Makoto, Osaka-shi, Osaka 532-8524 (JP); NAKAJIMA, Keisuke, Osaka-shi, Osaka 532-8524 (JP); FURUMOCHI, Masahiro, Osaka-shi, Osaka 532-8524 (JP); NAGANO, Takayuki, Osaka-shi, Osaka 532-8524 (JP)
(74) Representative: Nieuwenhuys, William Francis
(86) International application number: PCT/JP2014/005635
(87) International publication number: WO 2015/068402

(56) References cited:
- EP-A1- 2 308 311
- WO-A1-2010/146635
- WO-A1-2011/158944
- JP-A- H0 884 554
- JP-A- H07 184 525
- JP-A- H09 224 546
- JP-A- H10 313 805
- JP-A- H11 346 641
- JP-A- 2010 187 621
- JP-A- 2010 187 623
- JP-A- 2011 000 001
- JP-U- H 075 386
- JP-U- S5 970 485
- JP-U- S57 203 787

## Description

### Technical Field

The present invention relates to a noodle string cutting device configured to cut a dough sheet into noodle strings by cutting blade rolls when producing noodles, and raw noodles formed by the noodle string cutting device.

### Background Art

A typical method of producing noodles includes: mixing and kneading noodle materials such as wheat flour and starch to form a noodle dough; and rolling out the noodle dough into a dough sheet having a predetermined thickness. A noodle string cutting device cuts the dough sheet into noodle strings each having a predetermined thickness. The obtained noodle strings are subjected to processing, such as cutting or steam-boiling. Atypical method of cutting the dough sheet into the noodle strings by the noodle string cutting device is as follows. The noodle string cutting device includes a pair of opposing cutting blade rolls configured to rotate, and the dough sheet passes through between the pair of cutting blade rolls to be cut into strings. For example, a noodle string cutting device (noodle string dividing device) has been developed, which separates the noodle strings using four separating blades, the noodle strings being formed by cutting the dough sheet using a pair of cutting blade rolls (roll cutters) (see for example Japanese Laid-Open Utility Model Application Publication No. 57-203787).

JP 2010 187623 A, EP 2 308 311 A1 and JP H08 84554 A relate to devices for cutting and ejecting noodles.

### Summary of Invention

### Technical Problem

However, the invention described in Japanese Laid-Open Utility Model Application Publication No. 57-203787 is not made for the purpose of stacking the noodle strings on a conveyor such that in the steam-boiling, sticking of the noodle strings can be reduced, and the noodle strings can be entirely and uniformly gelatinized.

The present invention was made to solve the above problems, and an object of the present invention is to provide a noodle string cutting device capable of stacking noodle strings on a conveyor such that in steam-boiling, sticking of the noodle strings can be reduced, and the noodle strings can be entirely and uniformly gelatinized, and raw noodles formed by the noodle string cutting device.

### Solution to Problem

To solve the above problems, a noodle string cutting device according to the present invention is defined in claim 1.

If the chute member is not provided in the noodle string cutting device, falling of the noodle strings is not restricted by the chute member, and swing of the noodle strings in the conveying direction is not limited. To be specific, because of the movement of the conveyor, the swing direction of the noodle strings tends to be induced to the conveying direction (vertical direction).

On the other hand, the chute member is provided at a part of the noodle string cutting device according to the present invention, and the cut noodle strings contact the chute member before they reach the conveyor. Therefore, the speed of the cut noodle strings in the conveying direction becomes slow, and the noodle strings are accumulated on the chute member. Thus, the noodle strings are guided onto the conveyor while swinging in the width direction (lateral direction) of the chute member.

According to the above configuration, the noodle string cutting device of the present invention is configured such that two or more sets are formed, each of which includes the adjacent separating teeth rows and in each of which the chute member is provided so as to correspond to the falling positions of the noodle strings separated by one of the adjacent separating teeth rows.

Therefore, the noodle string cutting device according to the present invention can form two or more sets each including the layers of the noodle strings stacked such that the swing directions of the noodle strings intersect with each other lengthwise and crosswise. On this account, as compared to a configuration in which the chute member is not included, and all the noodle strings are stacked so as to extend in the conveying direction, the sticking of the noodle strings in the steam-boiling can be reduced, and the noodle strings can be entirely and uniformly gelatinized.

Therefore, the noodle string cutting device according to the present invention has an effect of being able to stack the noodle strings on the conveyor such that the sticking of the noodle strings in the steam-boiling can be reduced, and the noodle strings can be uniformly gelatinized.

The noodle string cutting device according to the present invention is configured such that: the chute member includes a first chute member and a second chute member; and the first chute member and the second chute member are provided so as to correspond to the falling positions of the noodle strings separated by the first separating teeth row and the falling positions of the noodle strings separated by the third separating teeth row, respectively, or the first chute member and the second chute member are provided so as to correspond to the falling positions of the noodle strings separated by the second separating teeth row and the falling positions of the noodle strings separated by the fourth separating teeth row, respectively.

According to the above configuration, the first chute member and the second chute member are provided so as to correspond to the falling positions of the noodle strings separated by the first separating teeth row and the falling positions of the noodle strings separated by the third separating teeth row, respectively, or the first chute member and the second chute member are provided so as to correspond to the falling positions of the noodle strings separated by the second separating teeth row and the falling positions of the noodle strings separated by the fourth separating teeth row, respectively. Therefore, the noodle strings separated by the adjacent separating teeth rows are stacked on the conveyor so as to swing in different directions.

Thus, the noodle string cutting device according to the present invention can stack on the conveyor the noodle strings cut such that the swing directions of the noodle strings are alternately different from each other. On this account, the noodle strings are prevented from swinging only in the conveying direction to be stacked on one another. Further, the sticking of the noodle strings in the steam-boiling can be reduced, and the noodle strings can be entirely and uniformly gelatinized.

The noodle string cutting device according to the present invention may be configured such that: the first chute member and the second chute member include respective noodle string contacting surfaces inclined relative to the conveying direction of the conveyor and contacting the noodle strings; and the noodle string contacting surface of the first chute member and the noodle string contacting surface of the second chute member are inclined in respective directions that are different from each other or the same as each other.

In order to solve the above problems, raw noodles according to the present invention are formed by the noodle string cutting device according to claim 1.

Therefore, the noodle string cutting device according to the present invention can form two or more sets each including the layers of the noodle strings stacked such that the swing directions of the noodle strings intersect with each other. On this account, when the raw noodles produced by the noodle string cutting device according to the present invention is compared with the raw noodles which are produced by the noodle string cutting device not including the chute member and in which all the noodle strings are stacked so as to extend in the conveying direction, the sticking of the noodle strings in the steam-boiling can be reduced, and the noodle strings can be entirely and uniformly gelatinized.

Thus, the raw noodles according to the present invention has an effect of being able to reduce the sticking of the noodle strings in the steam-boiling and entirely and uniformly gelatinize the noodle strings.

The raw noodles produced as above are used for producing instant noodles, frozen noodle, and chilled noodles. Since the sticking of the noodle strings in the steam-boiling can be reduced, the noodles which hardly cause the sticking of the noodle strings when the noodles are eaten can be provided.

### Advantageous Effects of Invention

The noodle string cutting device according to the present invention is configured as above and has an effect of being able to stack the noodle strings on the conveyor such that in the steam-boiling, the sticking of the noodle strings can be reduced, and the noodle strings can be entirely and uniformly gelatinized.

Further, the raw noodle according to the present invention is formed as above and has an effect of being able to, in the steam-boiling, reduce the sticking of the noodle strings and gelatinize the noodle strings entirely and uniformly.

### Brief Description of Drawings

Fig. 1 is a cross-sectional view showing one example of a schematic configuration of a noodle string cutting device according to the present embodiment.
Fig. 2 is a plan view showing the configurations of a first cutting blade roll and second cutting blade roll included in the noodle string cutting device shown in Fig. 1.
Fig. 3 is a diagram showing a state where the first cutting blade roll and the second cutting blade roll shown in Fig. 2 engage with each other.
Fig. 4 is a perspective view showing the configuration of a first scraper included in the noodle string cutting device according to the present embodiment.
Fig. 5 is a perspective view showing the configuration of a second scraper included in the noodle string cutting device according to the present embodiment.
Fig. 6 is a perspective view showing the configuration of a first chute member included in the noodle string cutting device according to the present embodiment.
Fig. 7 is a perspective view showing the configuration of a second chute member included in the noodle string cutting device according to the present embodiment.
Fig. 8 is a table for schematically explaining cut states of noodle strings on a conveyor, the noodle strings being cut by the noodle string cutting device according to the present embodiment.
Figs. 9A and 9B are tables showing experimental results regarding sticking states of the noodle strings. Fig. 9A shows the experimental results regarding the noodle strings cut by the noodle string cutting device according to the present embodiment. Fig. 9B shows the experimental results regarding the noodle strings cut by a chute member-excluded device.
Fig. 10 is a cross-sectional view showing one example of a schematic configuration of the noodle string cutting device according to a modified example of the present embodiment.
Fig. 11 is a cross-sectional view showing one example of a schematic configuration of the noodle string cutting device according to another modified example of the present embodiment.

### Description of Embodiments

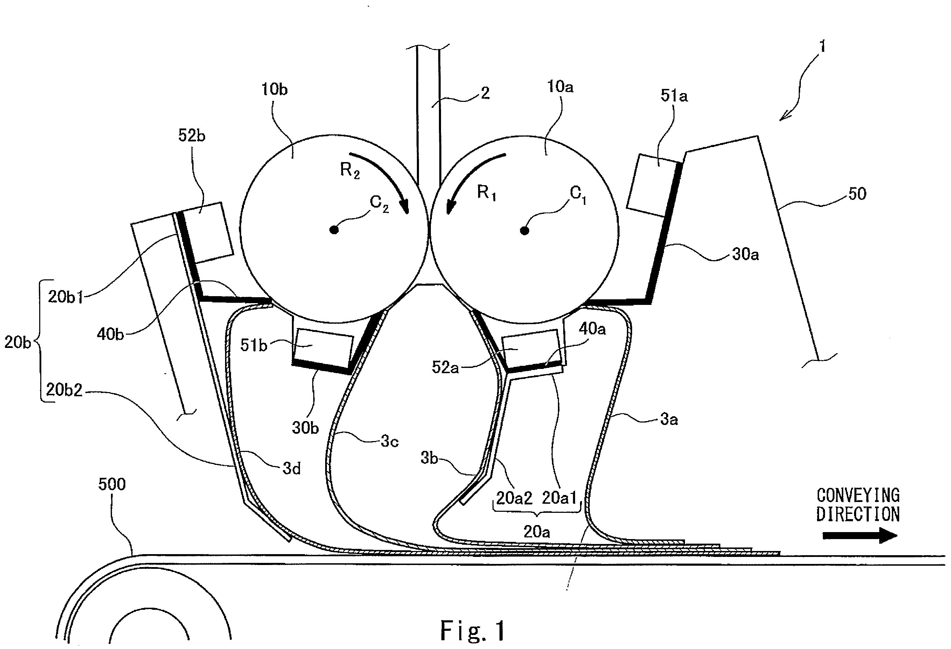

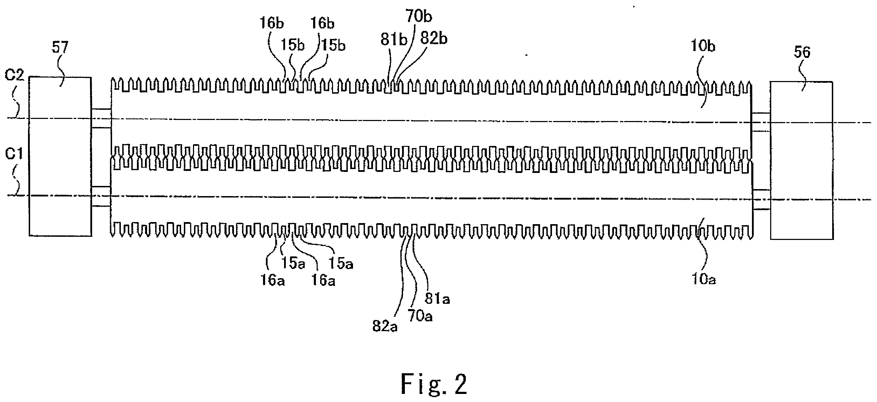

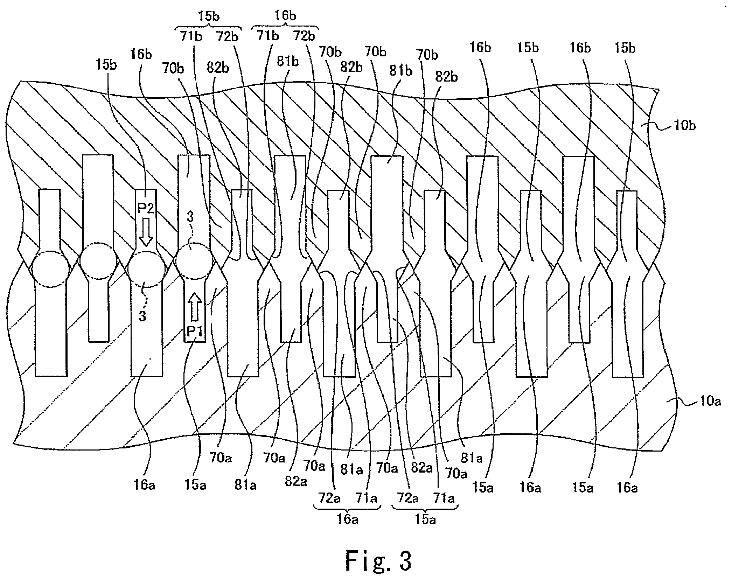

Hereinafter, a specific example of a noodle string cutting device 1 according to an embodiment of the present invention will be explained in reference to Figs. 1 to 3. Fig. 1 is a cross-sectional view showing one example of a schematic configuration of the noodle string cutting device 1 according to the present embodiment. For convenience of explanation, a lower portion of a casing 50 is not shown in Fig. 1. Fig. 2 is a plan view showing the configurations of a first cutting blade roll 10a and second cutting blade roll 10b included in the noodle string cutting device 1 shown in Fig. 1. In the following explanations and drawings, the same reference signs are used for the same components, and explanations thereof are omitted. Fig. 3 is a diagram showing a state where the first cutting blade roll 10a and the second cutting blade roll 10b shown in Fig. 2 engage with each other.

### Configuration of Noodle String Cutting Device

First, the configuration of the noodle string cutting device 1 according to the present embodiment will be explained. The noodle string cutting device 1 according to the present embodiment is a device configured to cut a dough sheet 2 to form a plurality of noodle strings 3a to 3d. It should be noted that in the following explanations, the noodle strings 3a to 3d may be simply called "noodle strings 3" when it is especially unnecessary to distinguish the noodle strings 3a to 3d. Explained as the noodle string cutting device 1 is a round blade type device including a round-blade cutting blade roll (cutting blade roll by which the cross section of a cut noodle string becomes substantially circular). However, the shape type of a cutting blade of the cutting blade roll is not limited to this. For example, the shape type of the cutting blade may be the other shape type, such as a square blade or a knife blade.

As shown in Fig. 1, the noodle string cutting device 1 according to the present embodiment includes the casing 50, the first cutting blade roll 10a, the second cutting blade roll 10b, a first scraper 30a, a second scraper 40a, a third scraper 30b, a fourth scraper 40b, a first chute member 20a, and a second chute member 20b.

As shown in Fig. 2, the casing 50 includes a first frame 56 and a second frame 57. The first frame 56 and the second frame 57 include two pairs of through holes (not shown) into which a shaft member of the first cutting blade roll 10a and a shaft member of the second cutting blade roll 10b are inserted. The first cutting blade roll 10a and the second cutting blade roll 10b can be rotatably supported by these two pairs of through holes.

As shown in Fig. 1, the casing 50 includes a first horizontal member 51a, a second horizontal member 52a, a third horizontal member 51b, and a fourth horizontal member 52b, each of which extends between the first frame 56 and the second frame 57.

As shown in Fig. 2, the first horizontal member 51a, the second horizontal member 52a, the third horizontal member 51b, and the fourth horizontal member 52b are rod-like members extending in axial directions of a first rotation axis C1 and a second rotation axis C2. As shown in Fig. 1, the first scraper 30a, the second scraper 40a, the third scraper 30b, and the fourth scraper 40b are attached to the first horizontal member 51a, the second horizontal member 52a, the third horizontal member 51b, and the fourth horizontal member 52b, respectively. Further, the first chute member 20a and the second chute member 20b are attached to the second horizontal member 52a and the fourth horizontal member 52b, respectively. Although details will be described later, in an example shown in Fig. 1, an attaching surface of the second scraper 40a and an attaching surface 20a1 of the first chute member 20a are superimposed on each other and attached to the second horizontal member 52a together. Similarly, an attaching surface of the fourth scraper 40b and an attaching surface 20b1 of the second chute member 20b are superimposed on each other, and attached to the fourth horizontal member 52b together. A conveyor 500 is provided under the casing 50.

### Configurations of First and Second Cutting Blade Rolls

As shown in Fig. 1, the first cutting blade roll 10a is rotatable around the first rotation axis C1 in a first rotation direction R1. As shown in Fig. 2, the first cutting blade roll 10a includes: a plurality of first pushing portions (in the round blade type device, portions each including a thin groove (shallow groove) 82a) 15a formed on an outer periphery thereof; and a plurality of first fitting portions (in the round blade type device, portions each including a thick groove (deep groove) 81a) 16a each formed between the adjacent first pushing portions 15a. The plurality of first pushing portions 15a and the plurality of first fitting portions 16a are alternately formed along the axial direction of the first rotation axis C1.

More specifically, as shown in Figs. 2 and 3, a plurality of blade portion 70a, the plurality of thick grooves 81a, and the plurality of thin grooves 82a are formed on the outer periphery of the first cutting blade roll 10a. The thick groove 81a or the thin groove 82a is formed between the adjacent blade portions 70a. The thick grooves 81a and the thin grooves 82a are alternately formed in the axial direction of the first rotation axis C1. As shown in Fig. 3, a tip end portion of the blade portion 70a is pointed toward the second cutting blade roll 10b and includes an inclined portion 71a as a left side portion and an inclined portion 72a as a right side portion.

Therefore, to be precise, the first pushing portion 15a is constituted by: the thin groove 82a; and a gap between the inclined portion 71a of the tip end portion of one of the adjacent blade portions 70a and the inclined portion 72a of the tip end portion of the other blade portion 70a. Further, the first fitting portion 16a is constituted by: the thick groove 81a; and a gap between the inclined portion 72a of the tip end portion of one of the adjacent blade portions 70a and the inclined portion 71a of the tip end portion of the other blade portion 70a.

As shown in Figs. 1 and 2, the second cutting blade roll 10b rotates around the second rotation axis C2 in a second rotation direction R2. The second rotation axis C2 is parallel to the first rotation axis C1, and the second rotation direction R2 is opposite to the first rotation direction R1. The second cutting blade roll 10b includes: a plurality of second pushing portions 15b formed on an outer periphery thereof; and a plurality of second fitting portions 16b each formed between the adjacent second pushing portions 15b. The plurality of second pushing portions 15b and the plurality of second fitting portions 16b are alternately formed along the axial direction of the second rotation axis C1.

More specifically, as shown in Figs. 2 and 3, a plurality of blade portions 70b, a plurality of thick grooves 81b, and a plurality of thin grooves 82b are formed on the outer periphery of the second cutting blade roll 10b. The thick groove 81b or the thin groove 82b is formed between the adjacent blade portions 70b. The thick grooves 81b and the thin grooves 82b are alternately formed in the axial direction of the second rotation axis C2. As shown in Fig. 3, a tip end portion of the blade portion 70b is pointed toward the first cutting blade roll 10a and includes an inclined portion 71b as a left side portion and an inclined portion 72b as a right side portion.

Therefore, to be precise, the second pushing portion 15b is constituted by: the thin groove 82b; and a gap between the inclined portion 71b of the tip end portion of one of the adjacent blade portions 70b and the inclined portion 72b of the tip end portion of the other blade portion 70b. Further, the second fitting portion 16b is constituted by: the thick groove 81b; and a gap between the inclined portion 72b of the tip end portion of one of the adjacent blade portions 70b and the inclined portion 71b of the tip end portion of the other blade portion 70b.

As shown in Figs. 2 and 3, the first cutting blade roll 10a and the second cutting blade roll 10b are in engagement with each other. More specifically, as shown in Fig. 3, the first cutting blade roll 10a and the second cutting blade roll 10b engage with each other such that the inclined portion 71b located an outer side of one of the adjacent two blade portions 70b forming the thin groove 82b of the second cutting blade roll 10b and the inclined portion 72b located an outer side of the other blade portion 70b respectively contact the inclined portion 71a located an inner side of one of the adjacent two blade portions 70a forming the thick groove 81a of the first cutting blade roll 10a and the inclined portion 72a located an inner side of the other blade portion 70a.

By the formation of the above engaging state, as shown in Fig. 1, the dough sheet 2 is cut into a plurality of noodle strings 3 (noodle strings 3a to 3d). The noodle strings 3 are pushed into the second fitting portions 16b of the second cutting blade roll 10b by the first pushing portions 15a of the first cutting blade roll 10a. Further, the noodle strings 3 are pushed into the first fitting portions 16a of the first cutting blade roll 10a by the second pushing portions 15b of the second cutting blade roll 10b.

Each of the noodle strings 3 pushed into the fitting portions 16b and 16a is formed to have a circular cross section or a cross section similar to the circular cross section. The noodle strings 3 pushed into the fitting portions 16a and 16b are separated by separating teeth formed on below-described scrapers (the first scraper 30a, the second scraper 40a, the third scraper 30b, and the fourth scraper 40b).

As shown in Fig. 1, the first scraper 30a and the second scraper 40a are provided so as to correspond to the first cutting blade roll 10a. The third scraper 30b and the fourth scraper 40b are provided so as to correspond to the second cutting blade roll 10b. Each of the scrapers is attached to the casing 50 such that an angle (contact angle) between a tangential line of the cutting blade roll at a portion to which a tooth tip of the scraper is inserted and the tooth tip falls within a range of about 10° to 60°. It is preferable that the position of each scraper be suitably set at such a position that within the range of about 10° to 60°, the noodle strings are easily separated, and the tooth tip of the scraper hardly wears.

### Configurations of Scrapers

Next, the scrapers 30a, 40a, 30b, and 40b will be explained. In the noodle string cutting device 1 according to the present embodiment, two scrapers that are the first scraper 30a and the second scraper 40a are provided for the first cutting blade roll 10a, and two scrapers that are the third scraper 30b and the fourth scraper 40b are provided for the second cutting blade roll 10b.

In the present embodiment, a plurality of separating teeth lined up at a tip end of each scraper are collectively called a separating teeth row. Further, the separating teeth rows provided in order from an upstream side to a downstream side along a conveying direction of the conveyor 500 and contacting the cutting blade rolls are referred to as a fourth separating teeth row, a third separating teeth row, a second separating teeth row, and a first separating teeth row.

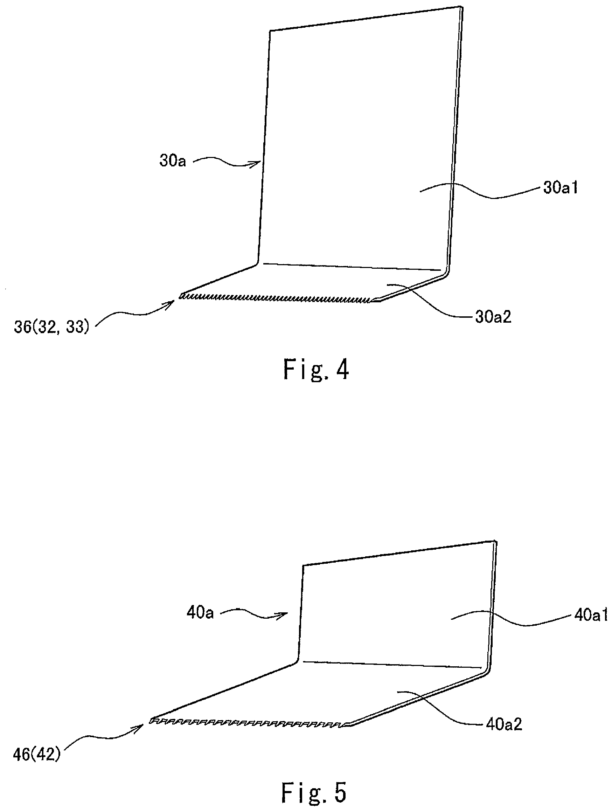

First, the first scraper 30a and the fourth scraper 40b will be explained. Herein, the configuration of the first scraper 30a will be explained as an example in reference to Fig. 4. Since the fourth scraper 40b is similar in configuration to the first scraper 30a, an explanation thereof is omitted.

Fig. 4 is a perspective view showing the configuration of the first scraper 30a included in the noodle string cutting device 1 according to the present embodiment. As shown in Fig. 4, the first scraper 30a is formed by bending a plate-shaped member having a substantially rectangular shape and is constituted by an attaching surface 30a1 and a separating surface 30a2.

The attaching surface 30a1 is a surface that is brought into surface-contact with the first horizontal member 51a for attaching the first scraper 30a to the first horizontal member 51a of the casing 50. The attaching surface 30a1 is brought into surface-contact with the first horizontal member 51a, and the first scraper 30a is fixed by, for example, a fixing bolt (not shown). A washer (not shown) is interposed between the first horizontal member 51a and the fixing bolt.

As shown in Fig. 4, the separating surface 30a2 includes a teeth group 36 at a tip end portion thereof. The teeth group 36 is constituted by a plurality of separating teeth 32 and cleaning teeth 33. The separating teeth 32 are formed so as to be inserted into the first fitting portions 16a, and the cleaning teeth 33 are formed so as to be inserted into the first pushing portions 15a. To be specific, the separating teeth 32 are teeth that are pushed into the respective first fitting portions 16a (thick grooves 81a) to separate the noodle strings 3a (see Fig. 1) tightly contacting the first fitting portions 16a. The cleaning teeth 33 are teeth that take out cut chips in the thin grooves 82a constituting the first pushing portions 15a.

Next, the configurations of the second and third scrapers 40a and 30b will be explained. Since the second scraper 40a and the third scraper 30b are similar in configuration to each other, the second scraper 40a will be specifically explained.

As shown in Fig. 5, as with the first scraper 30a, the second scraper 40a is formed by bending a plate-shaped member having a substantially rectangular shape and is constituted by an attaching surface 40a1 and a separating surface 40a2. Fig. 5 is a perspective view showing the configuration of the second scraper 40a included in the noodle string cutting device 1 according to the present embodiment.

As with the first scraper 30a, the attaching surface 40a1 of the second scraper 40a is brought into surface-contact with the second horizontal member 52a of the casing 50, and the second scraper 40a is fixed by, for example, a fixing bolt (not shown). A washer (not shown) is interposed between the second horizontal member 52a and the fixing bolt.

However, the second scraper 40a is different from the first scraper 30a regarding the arrangement of a plurality of separating teeth 42 constituting a teeth group 46 formed at a tip end portion of the separating surface 40a2. To be specific, the separating teeth 42 of the second scraper 40a are provided at regular intervals such that one separating tooth 42 is provided for every two separating teeth 32 of the first scraper 30a.

Therefore, when the first cutting blade roll 10a rotates in the first rotation direction R1, first, the noodle strings 3b (see Fig. 1) are separated by the separating teeth 42 of the second scraper 40a. At this time, the noodle strings passes through the second scraper 40a at positions where the separating teeth 42 are not formed at the tip end of the second scraper 40a. Then, the noodle strings 3a are separated by the separating teeth 32 of the first scraper 30a. Thus, the noodle strings 3 can be obtained from two positions of the outer periphery of the first cutting blade roll 10a, the two positions being different from each other in the rotational direction.

In the present embodiment, the number of separating teeth 32 of the first scraper 30a and the number of separating teeth 42 of the second scraper 40a are different from each other. However, the first scraper 30a and the second scraper 40a may be configured such that the separating teeth 32 of the first scraper 30a and the separating teeth 42 of the second scraper 40a are alternately arranged one by one. To be specific, the first scraper 30a and the second scraper 40a may be provided such that the separating tooth 32 of the first scraper 30a is inserted into one of the adjacent first fitting portions 16a, and the separating tooth 42 of the second scraper 40a is inserted into the other first fitting portion 16a.

### Configuration of Chute Member

As shown in Fig. 1, the first chute member 20a is attached to the second horizontal member 52a together with the second scraper 40a, and the second chute member 20b is attached to the fourth horizontal member 52b together with the fourth scraper 40b. The first chute member 20a is a flat plate that guides the separated noodle strings 3b onto a mounting surface of the conveyor 500 and prevents the noodle strings 3b from swinging forward or rearward in a proceeding direction of the conveyor 500, and the second chute member 20b is a flat plate that guides the separated noodle strings 3d onto the mounting surface of the conveyor 500 and prevents the noodle strings 3d from swinging forward or rearward in the proceeding direction of the conveyor 500.

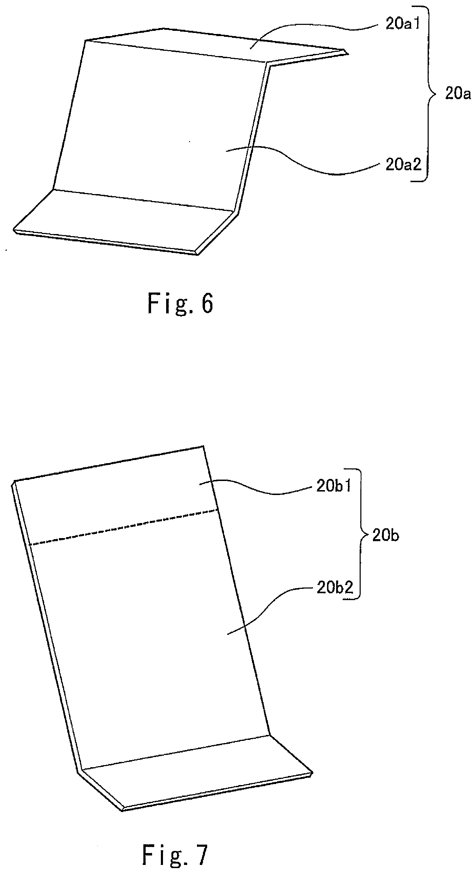

Hereinafter, the configuration of the first chute member 20a included in the noodle string cutting device 1 according to the present embodiment will be explained in reference to Fig. 6. Fig. 6 is a perspective view showing the configuration of the first chute member 20a.

As shown in Fig. 6, the first chute member 20a includes: the attaching surface 20a1 for attaching the first chute member 20a to the second horizontal member 52a together with the second scraper 40a; and a noodle string contacting surface 20a2 that is bent from the attaching surface 20a1 and contacts the noodle strings 3b separated from the first cutting blade roll 10a by the separating teeth row of the second scraper 40a. The noodle string contacting surface 20a2 is a surface spreading in a width direction of the conveyor 500 and is inclined at a fixed angle relative to a conveying direction of the conveyor 500. To be specific, the first chute member 20a is required to correspond to the falling positions of the noodle strings 3b such that the noodle string contacting surface 20a2 surely contacts the noodle strings 3b and is also required to be inclined such that the noodle strings 3b are not accumulated on the noodle string contacting surface 20a2 but are guided to the conveyor 500.

As shown in Figs. 1 and 6, an end portion of the noodle string contacting surface 20a2 is bent. A bent angle at this end portion may be such an inclination angle that with the first chute member 20a attached to the casing 50, the noodle strings 3b contacting the noodle string contacting surface 20a2 are smoothly guided to the conveyor 500.

Next, the configuration of the second chute member 20b included in the noodle string cutting device 1 according to the present embodiment will be explained in reference to Fig. 7. Fig. 7 is a perspective view showing the configuration of the second chute member 20b.

As shown in Fig. 7, the second chute member 20b includes: the attaching surface 20b1 for attaching the second chute member 20b to the fourth horizontal member 52b together with the fourth scraper 40b; and a noodle string contacting surface 20b2 with which the noodle strings 3d falling toward the conveyor 500 contact. The noodle string contacting surface 20b2 is a surface spreading in the width direction of the conveyor 500 and is inclined at a fixed angle relative to the conveying direction of the conveyor 500. To be specific, the second chute member 20b is required to correspond to the falling positions of the noodle strings 3d such that the noodle string contacting surface 20b2 surely contacts the noodle strings 3d and is also required to be inclined such that the noodle strings 3d are not accumulated on the noodle string contacting surface 20b2 but are guided to the conveyor 500. When the first chute member 20a and the second chute member 20b are attached, the noodle string contacting surface 20b2 of the second chute member 20b is inclined in a direction different from a direction in which the noodle string contacting surface 20a2 of the first chute member 20a is inclined.

As shown in Figs. 1 and 7, an end portion of the noodle string contacting surface 20b2 is bent. A bent angle at this end portion may be such an inclination angle that with the second chute member 20b attached to the casing 50, the noodle strings 3d contacting the noodle string contacting surface 20b2 are smoothly guided to the conveyor 500.

The first chute member 20a and the second chute member 20b are just examples, and the shapes thereof are not limited to the above shapes. The first chute member 20a and the second chute member 20b may be suitably modified depending on: attachment positions of the first and second chute members 20a and 20b attached to the casing 50; and a range in which the noodle strings 3 may move when the noodle strings 3 separated from the cutting blade rolls fall onto the conveyor 500. For example, the first chute member 20a is bent at a boundary between the attaching surface 20a1 and the noodle string contacting surface 20a2 and is further bent at the end portion of the noodle string contacting surface 20a2. On the other hand, the second chute member 20b is configured such that the end portion of the noodle string contact surface 20b2 is bent. As above, each of the first chute member 20a and the second chute member 20b is formed by bending a flat plate. This bent portion may be folded at a predetermined angle or may be curved. Furthermore, the entire noodle string contacting surfaces 20a2 and 20b2 may be curved.

The first chute member 20a and the second chute member 20b are configured such that the end portions of the noodle string contacting surfaces 20a2 and 20b2 are bent. However, each of the noodle string contacting surfaces 20a2 and 20b2 may be just a flat plate not including such a bent portion at the end portion. To be specific, the end portion of the noodle string contacting surface 20a2 may be bent or may not be bent depending on an angle of the noodle string contacting surface 20a2 relative to the mounting surface of the conveyor 500, and the end portion of the noodle string contacting surface 20b2 may be bent or may not be bent depending on an angle of the noodle string contacting surface 20b2 relative to the mounting surface of the conveyor 500.

### Falling States of Noodle Strings

Before explaining falling states of the noodle strings separated from the cutting blade roll to the conveyor 500, a relation between a transfer speed of the conveyor 500 and a cutting speed of the noodle strings 3 by the first cutting blade roll 10a and the second cutting blade roll 10b will be explained. The following will explain an example in which the noodle strings 3 separated by the separating teeth rows are directly stacked on the conveyor 500.

If the speed at which the noodle strings 3 are cut from the dough sheet 2 by the first cutting blade roll 10a and the second cutting blade roll 10b and the transfer speed of the conveyor 500 are substantially equal to each other, the noodle strings 3 substantially linearly extend in the conveying direction on the mounting surface of the conveyor 500. However, when considering mass production of the noodles, setting the cutting speed of the noodle strings 3 and the transfer speed to be substantially equal to each other causes an increase in length of a line for conveying the noodle strings 3, so that it becomes difficult to secure an installation location of production equipment. Therefore, a configuration is adopted, in which the cutting speed of the noodle strings 3 is set to be higher than the transfer speed of the conveyor 500.

In the noodle string cutting device 1 according to the present embodiment, the speed at which the noodle strings 3 are cut from the dough sheet 2 by a pair of cutting blade rolls 10a and 10b is set to be adequately higher than the transfer speed of the conveyor 500. Therefore, the cut noodle strings 3 are stacked on the mounting surface of the conveyor 500 so as to absorb a difference between the cutting speed and the speed of the conveyor 500. Further, the noodle strings 3 swing in the conveying direction by the difference between the cutting speed of the noodle strings 3 and the transfer speed of the conveyor 500.

Specifically, the noodle strings 3 separated from the cutting blade roll by the separating teeth row fall as below if there is no chute member that is located between the scraper and the mounting surface of the conveyor 500 and limits the movements of the noodle strings 3.

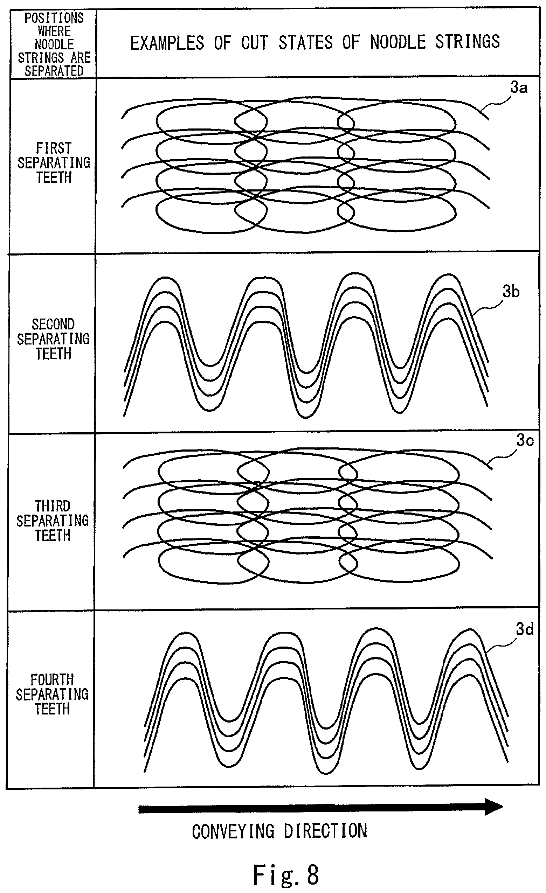

To be specific, the noodle strings 3a separated from the first cutting blade roll 10a by the separating teeth row and the noodle strings 3c separated from the second cutting blade roll 10b by the separating teeth row falls by their own weights to reach the mounting surface of the conveyor 500 and are stacked on the mounting surface of the conveyor 500 to absorb the difference between the cutting speed of the noodle strings 3a or 3c and the speed of the conveyor 500. At this time, the noodle strings 3a and 3c tend to be subjected to force so as to swing forward and rearward in the conveying direction of the conveyor 500. For example, as shown in Fig. 8 by the cut states of the noodle strings 3a separated by the separating teeth row (the first separating teeth shown in Fig. 8) of the first scraper 30a and the cut states of the noodle strings 3c separated by the separating teeth row (the third separating teeth shown in Fig. 8) of the third scraper 30b, the noodle strings 3a and 3c are stacked on the mounting surface of the conveyor 500 while mainly forming annular shapes each of which is longer in the conveying direction of the conveyor 500 than in the width direction of the conveyor 500 (i.e., while swinging in the conveying direction).

Fig. 8 is a table for schematically explaining the cut states of the noodle strings 3 on the conveyor 500, the noodle strings 3 being cut by the noodle string cutting device 1 according to the present embodiment. Fig. 8 shows the cut states of the noodle strings 3a to 3d on the conveyor 500, the noodle strings 3a to 3d being separated by the separating teeth rows of the first scraper 30a, the second scraper 40a, the third scraper 30b, and the fourth scraper 40b, respectively.

Fig. 8 shows that the cut states of the noodle strings 3a separated by the separating teeth row of the first scraper 30a and the cut states of the noodle strings 3c separated by the separating teeth row of the third scraper 30b draw periodically similar annular shapes. It should be noted that in Fig. 8, the cut states of the noodle strings 3a and 3c are simplified for facilitating understanding of the swing directions of the noodle strings 3a and 3c. Actually, the cut states may include wavy shapes in the annular shapes depending on a high-low relation between the transfer speed and the cutting speed of the noodle strings 3a or 3c.

When the first chute member 20a or the second chute member 20b each of which is located between the scraper and the mounting surface of the conveyor 500 and limits the movements of the noodle strings 3 is provided, the noodle strings 3 separated from the cutting blade roll by the separating teeth row fall as below.

To be specific, the noodle strings 3b separated by the separating teeth row (the second separating teeth shown in Fig. 8) of the second scraper 40a and falling by their own weights contact the noodle string contacting surface 20a2 of the first chute member 20a, and the noodle strings 3d separated by the separating teeth row (the fourth separating teeth shown in Fig. 8) of the fourth scraper 40b and falling by their own weights contact the noodle string contacting surface 20b2 of the second chute member 20b. At this time, to absorb the difference between the cutting speed of the noodle strings 3b or 3d and the speed of the conveyor 500, the noodle strings 3b mainly swing in the width direction of the conveyor 500 on the noodle string contacting surface 20a2, and the noodle strings 3d mainly swing in the width direction of the conveyor 500 on the noodle string contacting surface 20b2. Then, the noodle strings 3b are guided to the mounting surface of the conveyor 500 along the inclination of the noodle string contacting surface 20a2, and the noodle strings 3d are guided to the mounting surface of the conveyor 500 along the inclination of the noodle string contacting surface 20b2. The noodle strings 3b and 3d guided to the mounting surface are conveyed in accordance with the movement of the conveyor 500.

Therefore, as shown in Fig. 8 by the cut states of the noodle strings 3b separated by the separating teeth row of the second scraper 40a and the cut states of the noodle strings 3d separated by the separating teeth row of the fourth scraper 40b, the noodle strings 3b and 3d are stacked on the mounting surface of the conveyor 500 while mainly forming wave shapes having amplitude in the width direction of the conveyor 500 (i.e., while swinging in the width direction). Fig. 8 shows that the noodle strings 3b separated by the separating teeth row of the second scraper 40a and the noodle strings 3d separated by the separating teeth row of the fourth scraper 40b draw periodical wave shapes having amplitude in the width direction of the conveyor 500. It should be noted that in Fig. 8, the cut states of the noodle strings 3b and 3d stacked on the mounting surface of the conveyor 500 are simplified for facilitating understanding of the swing directions of the noodle strings 3b and 3d. Actually, the cut states mainly include the wave shapes but may also include annular shapes in some cases.

In the present embodiment, the noodle strings 3d are stacked on the mounting surface of the conveyor 500 as a lowermost layer, and the noodle strings 3c, 3b, and 3a are stacked in this order on the noodle strings 3d. To be specific, a layer of the noodle strings 3c of the annular shapes each of which is longer in the conveying direction is stacked on the layer of the noodle strings 3d of the wave shapes having the amplitude in the width direction of the conveyor 500, and a layer of the noodle strings 3b of the same wave shapes as the noodle strings 3d are stacked on the layer of the noodle strings 3c. Then, as an uppermost layer, a layer of the noodle strings 3a of the same annular shapes as the noodle strings 3c is further stacked. As above, the layers in each of which the swing direction of the noodle strings 3 separated from the cutting blade roll by the separating teeth row is the width direction of the conveyor 500 and the layers in each of which the swing direction of the noodle strings 3 separated from the cutting blade roll by the separating teeth row is the conveying direction of the conveyor 500 are alternately stacked in this order from the lower layer toward the upper layer.

In this case, as compared to a case where the noodle strings 3 are stacked on the conveyor 500 such that all of the four layers of the noodle strings 3 swing in the conveying direction, the sticking of the noodle strings in the steam-boiling can be reduced, and the noodle strings can be entirely and uniformly gelatinized.

It is preferable that the cutting speed be three times or more and twenty times or less the transfer speed of the conveyor 500. If the cutting speed is less than three times the transfer speed, the noodle strings 3 may be linearly stacked so as to extend substantially in the conveying direction. When the cutting speed is more than twenty times the transfer speed, the amount of noodle strings 3 stacked may become too large, and the noodle strings 3 may not be adequately steamed in the steam-boiling.

As above, the noodle string cutting device 1 according to the present embodiment can stack the noodle strings 3 on the conveyor 500 such that the sticking of the noodle strings in the steam-boiling can be reduced, and the noodle strings can be entirely and uniformly gelatinized.

The raw noodles cut by the noodle string cutting device 1 according to the present embodiment are used for producing instant noodles, frozen noodles, and chilled noodles. Since the sticking of the noodle strings in the steam-boiling can be reduced, the noodle string cutting device 1 according to the present embodiment can provide the noodles which hardly cause the sticking of the noodle strings when the noodles are eaten.

### Experimental Example 1

Next, noodle string sticking states of the instant noodles produced by using the noodle strings 3 cut by the noodle string cutting device 1 according to the present embodiment were compared with noodle string sticking states of the instant noodles produced by using the noodle strings 3 cut by a device (hereinafter referred to as a "chute member-excluded device") configured such that the first chute member 20a and the second chute member 20b are removed from the noodle string cutting device 1 according to the present embodiment. Specifically, twelve meals of instant noodles were prepared by steam-boiling the noodle strings 3 cut by the noodle string cutting device 1 and subjecting the noodle strings 3 to normal process steps, and twelve meals of instant noodles were prepared by steam-boiling the noodle strings 3 cut by the chute member-excluded device and subjecting the noodle strings 3 to normal process steps. The instant noodles were cooked by a normal method, and the cooked instant noodles were stirred five times with chopsticks. Then, hot water was drained using a basket, and the number of sets of the noodle strings sticking each other in each meal of instant noodles was counted.

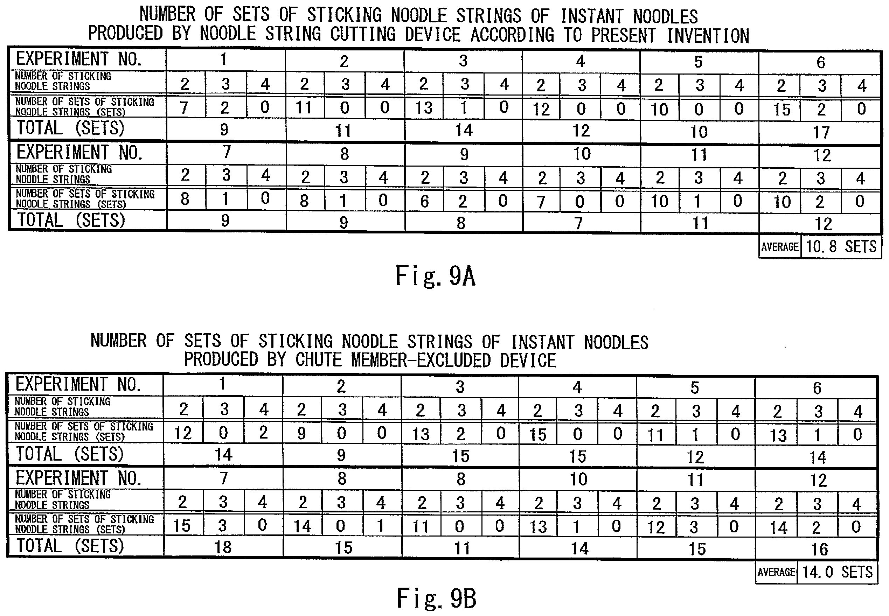

Results are shown in the tables of Figs. 9A and 9B. Fig. 9A shows the numbers of sets of the sticking noodle strings of the instant noodles produced by the noodle string cutting device according to the present embodiment, and Fig. 9B shows the numbers of sets of the sticking noodle strings of the instant noodles produced by the chute member-excluded device.

As shown in Fig. 9A, in a first meal of the instant noodles produced by the noodle string cutting device 1 according to the present embodiment, the number of sets of two sticking noodle strings was seven, the number of sets of three sticking noodle strings was two, and the number of sets of four sticking noodle strings was zero. Therefore, the number of sticking noodle strings was nine in total. In a second meal of the instant noodles produced by the noodle string cutting device 1 according to the present embodiment, the number of sets of two sticking noodle strings was eleven, the number of sets of three sticking noodle strings was zero, and the number of sets of four sticking noodle strings was zero. Therefore, the number of sticking noodle strings was eleven in total. Experiments regarding twelve meals were performed in the same manner as above, and an average of the numbers of sets of the sticking noodle strings was 10.8.

On the other hand, as shown in Fig. 9B, experiments regarding twelve meals of the instant noodles produced by the chute member-excluded device were performed in the same manner as above, and an average of the numbers of sets of the sticking noodle strings was 14.0. It was found from these results that the number of sets of the sticking noodle strings of the instant noodles produced by the noodle string cutting device 1 according to the present embodiment was smaller than that of the instant noodles produced by the chute member-excluded device.

### Modified Example 1

As described above, the noodle string cutting device 1 according to the present embodiment is configured such that: the first chute member 20a is provided so as to correspond to the falling positions of the noodle strings 3b separated by the separating teeth row of the second scraper 40a; and the second chute member 20b is provided so as to correspond to the falling positions of the noodle strings 3d separated by the separating teeth row of the fourth scraper 40b. However, the configuration of the noodle string cutting device 1 is not limited to this. For example, the noodle string cutting device 1 may be configured such that: the first chute member 20a is provided so as to correspond to the falling positions of the noodle strings 3a separated by the separating teeth row of the first scraper 30a; and the second chute member 20b is provided so as to correspond to the falling positions of the noodle strings 3c separated by the separating teeth row of the third scraper 30b.

### Modified Example 2

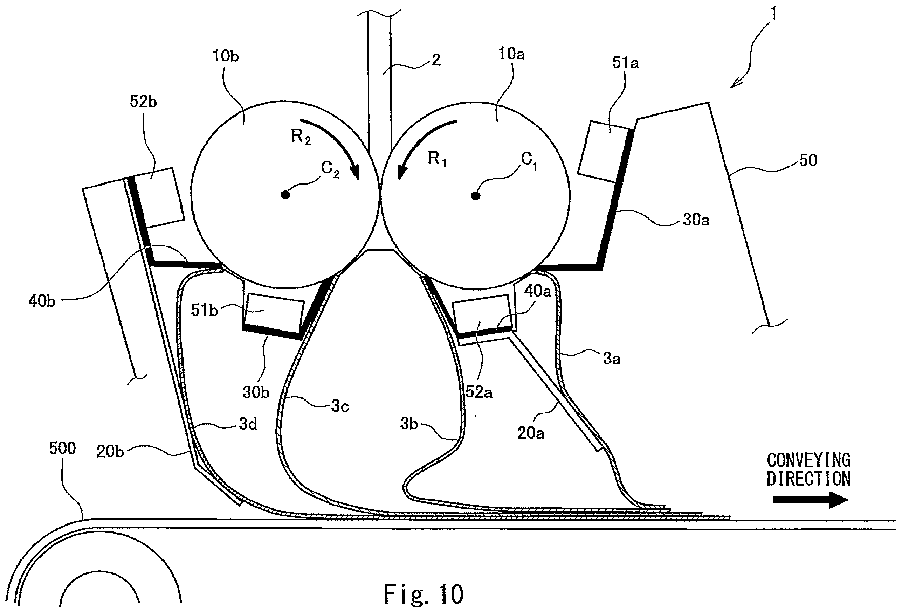

Further, as shown in Fig. 10, the noodle string cutting device 1 may be configured such that: the first chute member 20a is provided so as to correspond to the falling positions of the noodle strings 3a separated by the separating teeth row of the first scraper 30a; and the second chute member 20b is provided so as to correspond to the falling positions of the noodle strings 3d separated by the separating teeth row of the fourth scraper 40b. Fig. 10 is a cross-sectional view showing one example of a schematic configuration of the noodle string cutting device 1 according to a modified example of the present embodiment.

When the noodle string cutting device 1 is configured as above, the swing directions of the noodle strings 3d, 3c, 3b, and 3a are the width direction of the conveyor 500, the conveying direction of the conveyor 500, the conveying direction of the conveyor 500, and the width direction of the conveyor 500, respectively. At this time, two sets (a set including the layer of the noodle strings 3a and the layer of the noodle strings 3b and a set including the layer of the noodle strings 3c and the layer of the noodle strings 3d) each including the layers of the noodle strings 3 stacked such that the swing directions of the noodle strings 3 intersect with each other can be formed. In this case, as compared to a case where the first chute member 20a and the second chute member 20b are not included, and the noodle strings 3 are stacked such that the swing directions of all the noodle strings 3 are the conveying direction, the sticking of the noodle strings in the steam-boiling can be reduced.

The configuration of the noodle string cutting device 1 is not limited to the configuration of the noodle string cutting device 1 shown in Fig. 10 in which: the first chute member 20a is provided so as to correspond to the falling positions of the noodle strings 3a separated by the separating teeth row of the first scraper 30a; and the second chute member 20b is provided so as to correspond to the falling positions of the noodle strings 3d separated by the separating teeth row of the fourth scraper 40b. The noodle string cutting device 1 may be configured such that: the first chute member 20a is provided so as to correspond to the falling positions of the noodle strings 3b separated by the separating teeth row of the second scraper 40a; and the second chute member 20b is provided so as to correspond to the falling positions of the noodle strings 3c separated by the separating teeth row of the third scraper 30b.

### Modified Example 3

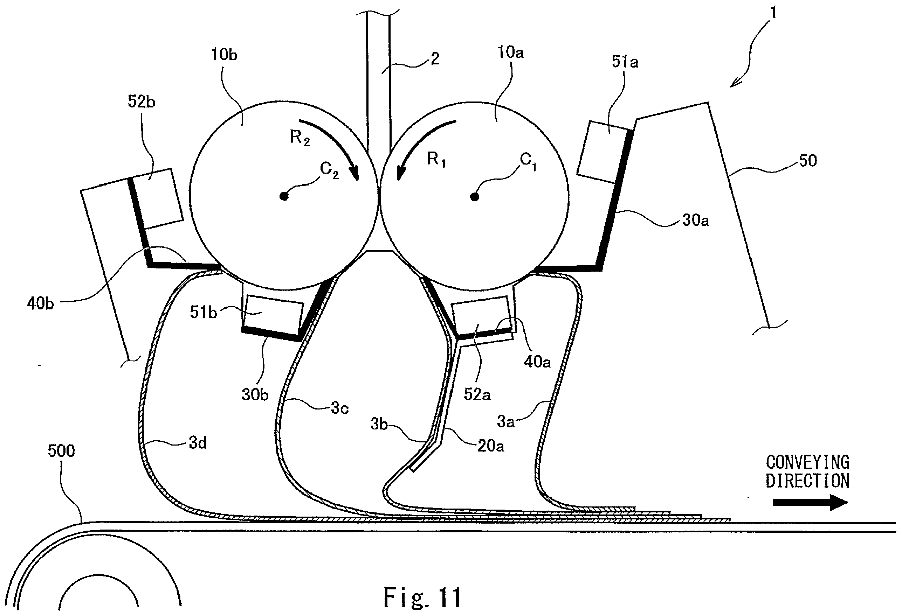

As shown in Fig. 11, the noodle string cutting device 1 may be configured such that: only the first chute member 20a is included as the chute member; and the first chute member 20a is provided so as to correspond to the falling positions of the noodle strings 3b separated by the separating teeth row of the second scraper 40a. Fig. 11 is a cross-sectional view showing one example of a schematic configuration of the noodle string cutting device 1 according to a modified example of the present embodiment.

When the noodle string cutting device 1 is configured as above, the swing directions of the noodle strings 3d, 3c, 3b,and 3a are the conveying direction of the conveyor 500, the conveying direction of the conveyor 500, the width direction of the conveyor 500, and the conveying direction of the conveyor 500, respectively. At this time, two sets (a set including the layer of the noodle string 3a and the layer of the noodle strings 3b and a set including the layer of the noodle strings 3b and the layer of the noodle strings 3c) each including the layers of the noodle strings 3 stacked such that the swing directions of the noodle strings 3 intersect with each other can be formed. In this case, as compared to a case where the first chute member 20a is not included, and the noodle strings 3 are stacked such that the swing directions of all the noodle strings 3 are the conveying direction, the sticking of the noodle strings in the steam-boiling can be reduced.

The configuration of the noodle string cutting device 1 is not limited to the configuration of the noodle string cutting device 1 shown in Fig. 11 in which the first chute member 20a is provided so as to correspond to the falling positions of the noodle strings 3b separated by the separating teeth row of the second scraper 40a. The noodle string cutting device 1 may be configured such that the first chute member 20a is provided so as to correspond to the falling positions of the noodle strings 3c separated by the separating teeth row of the third scraper 30b. To be specific, the first chute member 20a may be provided such that two or more sets each including the layers in which the swing directions of the noodle strings 3 intersect with each other are formed.

Further, the configuration of the noodle string cutting device 1 according to the present embodiment is not limited to a configuration in which two scrapers each including one separating teeth row are provided for one cutting blade roll. For example, the noodle string cutting device 1 according to the present embodiment may be configured such that one scraper including two separating teeth rows is provided for one cutting blade roll. Even when the scraper is configured as above, the separating teeth rows can be brought into contact with the outer periphery of the cutting blade roll at positions different from each other in the rotational direction and can separate the noodle strings from the cutting blade roll. At this time, the two separating teeth rows can be formed on one scraper in such a manner that the separating teeth each having a certain length and a certain angle and the separating teeth each having another certain length and another certain angle are alternately formed on the tip end portion of the scraper.

Even in this case, as with the above explanation, the separating teeth rows provided in order from the upstream side to the downstream side along the conveying direction of the conveyor and contacting the cutting blade rolls are referred to as the fourth separating teeth row, the third separating teeth row, the second separating teeth row, and the first separating teeth row.

Further, the noodle string cutting device 1 according to the present embodiment is configured to change the swing directions of the noodle strings 3 by the first chute member 20a and/or the second chute member 20b such that the noodle strings 3 swing in the width direction of the conveyor 500. To be specific, the noodle string cutting device 1 according to the present embodiment is configured to change the swing direction of the noodle strings 3 such that the noodle strings 3 that contact the chute member are stacked at substantially 90 degrees relative to the swing direction of the noodle strings 3 that do not contact the chute member. However, the configuration of the noodle string cutting device 1 according to the present embodiment is not necessarily limited to the configuration in which the swing direction of the noodle strings 3 is changed such that the noodle strings 3 that contact the chute member are stacked at substantially 90 degrees relative to the swing direction of the noodle strings 3 that do not contact the chute member. The swing direction of the noodle strings 3 that contact the chute member is only required to intersect with the swing direction of the noodle strings that swing in the conveying direction. It should be noted that it is preferable that the swing direction of the noodle strings 3 be changed such that the noodle strings 3 that contact the chute member are stacked at substantially 90 degrees relative to the swing direction of the noodle strings 3 that do not contact the chute member, since the sticking of the noodle strings in the steam-boiling can be effectively prevented.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention.

### Industrial Applicability

The present invention is useful for a noodle string cutting device configured to cut a dough sheet into a plurality of noodle strings. Especially, the present invention is advantageous when cutting a dough sheet into a plurality of noodle strings for producing instant noodles, frozen noodles, and chilled noodles.

### Reference Signs List

- 2: dough sheet
- 3: noodle string
- 3a: noodle string
- 3b: noodle string
- 3c: noodle string
- 3d: noodle string
- 10a: first cutting blade roll
- 10b: second cutting blade roll
- 15a: first pushing portion
- 15b: second pushing portion
- 16a: first fitting portion
- 16b: second fitting portion
- 20a: first chute member
- 20a1: attaching surface
- 20a2: noodle string contacting surface
- 20b: second chute member
- 20b1: attaching surface
- 20b2: noodle string contacting surface
- 30a: first scraper
- 30a1: attaching surface
- 30a2: separating surface
- 30b: third scraper
- 32: separating tooth
- 33: cleaning tooth
- 40a: second scraper
- 40b: fourth scraper
- 42: separating tooth
- 50: casing
- 51a: first horizontal member
- 51b: third horizontal member
- 52a: second horizontal member
- 52b: fourth horizontal member
- 56: first frame
- 57: second frame
- 70a: blade portion
- 70b: blade portion
- 71a: inclined portion
- 71b: inclined portion
- 72a: inclined portion
- 72b: inclined portion
- 81a: thick groove
- 81b: thick groove
- 82a: thin groove
- 82b: thin groove
- 500: conveyor
- C1: first rotation axis
- C2: second rotation axis
- R1: first rotation axis direction
- R2: second rotation axis direction

## Claims

1. A noodle string cutting device (1) configured to cut a dough sheet (2) into noodle strings (3a to 3d) to supply the noodle strings (3a to 3d) to a conveyor (500),
a transfer speed of the noodle strings (3a to 3d) by the conveyor (500) being lower than a cutting speed at which the noodle strings (3a to 3d) are cut from the dough sheet (2),
the noodle string cutting device (1) comprising:
a first cutting blade roll (10a) and second cutting blade roll (10b) configured to rotate in opposite directions (R₁, R₂) in an engaged state to cut the dough sheet (2) into the noodle strings (3a to 3d);
a first separating teeth row (32) and second separating teeth row (42) contacting an outer periphery of the first cutting blade roll (10a) at respective positions different from each other in a rotational direction (Ri) of the first cutting blade roll (10a) and configured to separate the noodle strings (3a to 3d) from the first cutting blade roll (10a);
a third separating teeth row and fourth separating teeth row contacting an outer periphery of the second cutting blade roll (10b) at respective positions different from each other in a rotational direction (R₂) of the second cutting blade roll (10b) and configured to separate the noodle strings (3a to 3d) from the second cutting blade roll (10b); **characterized by**
a first chute member (20a) and a second chute member (20b) each provided so as to correspond to a falling position of any of the noodle strings separated by the first separating teeth row (3a), the noodle strings separated by the second separating teeth row (3b), the noodle strings separated by the third separating teeth row (3c), and the noodle strings separated by the fourth separating teeth row (3d), the first and second chute members being configured to guide the noodle strings onto the conveyor (500),
wherein, the fourth separating teeth row, the third separating teeth row, the second separating teeth row (42), and the first separating teeth row (32) are provided in this order from an upstream side toward a downstream side in a conveying direction of the conveyor; and either:
(i) the first chute member (20a) and the second chute member (20b) are provided so as to respectively correspond to the falling positions of the noodle strings separated by the first separating teeth row (3a) and the falling positions of the noodle strings separated by the third separating teeth row (3c);
wherein the first chute member (20a) and the second chute member (20b) prevent the noodle strings separated by the first separating teeth row (3a) and the noodle strings separated by the third separating teeth row (3c) respectively from swinging forward or rearward in the proceeding direction of the conveyor (500); and,
wherein the noodle strings separated by the second separating teeth row (3b) and the noodle strings separated by the fourth separating teeth row (3d) fall by their own weights to reach the mounting surface of the conveyor (500) and tend to be subjected to force so as to swing forward and rearward in the proceeding direction of the conveyor (500)
or,
(ii) the first chute member (20a) and the second chute member (20b) are provided so as to respectively correspond to the falling positions of the noodle strings separated by the second separating teeth row (3b) and the falling positions of the noodle strings separated by the fourth separating teeth row (3d);
wherein the first chute member (20a) and the second chute member (20b) prevent the noodle strings separated by the second separating teeth row (3b) and the noodle strings separated by the fourth separating teeth row (3d) respectively from swinging forward or rearward in the proceeding direction of the conveyor (500); and,
wherein the noodle strings separated by the first separating teeth row (3a) and the noodle strings separated by the third separating teeth row (3c) fall by their own weights to reach the mounting surface of the conveyor (500) and tend to be subjected to force so as to swing forward and rearward in the proceeding direction of the conveyor (500).

2. The noodle string cutting device (1) according to claim 1, wherein:
the first chute member (20a) and the second chute member (20b) comprise respective noodle string contacting surfaces (20a1, 20a2, 20b1, 20b2) inclined relative to the conveying direction of the conveyor (500) and contacting the noodle strings; and
the noodle string contacting surface of the first chute member (20a1, 20a2) and the noodle string contacting surface of the second chute member (20b1, 20b2) are inclined in respective directions that are different from each other or the same as each other.

3. Raw noodles produced by the noodle string cutting device (1) according to claim 1.

## Patentansprüche

1. Nudelstrang-Schneidvorrichtung (1), die konfiguriert ist, um eine Teigbahn (2) in Nudelstränge (3a bis 3d) zu schneiden, um die Nudelstränge (3a bis 3d) einem Förderer (500) zuzuführen,
wobei eine Beförderungsgeschwindigkeit der Nudelstränge (3a bis 3d) durch den Förderer (500) niedriger ist als eine Schneidgeschwindigkeit, mit der die Nudelstränge (3a bis 3d) von der Teigbahn (2) geschnitten werden,
wobei die Nudelstrang-Schneidvorrichtung (1) Folgendes umfasst:
eine erste Schneidklingenwalze (10a) und eine zweite Schneidklingenwalze (10b), die konfiguriert sind, um sich in einem eingerückten Zustand in entgegengesetzten Richtungen (R₁, R₂) zu drehen, um die Teigbahn (2) in Nudelstränge (3a bis 3d) zu schneiden,
eine erste Trennzahnreihe (32) und eine zweite Trennzahnreihe (42), die einen Außenumfang der ersten Schneidklingenwalze (10a) an jeweiligen Positionen berühren, die sich in einer Drehrichtung (Ri) der ersten Schneidklingenwalze (10a) voneinander unterscheiden, und konfiguriert sind, um die Nudelstränge (3a bis 3d) von der ersten Schneidklingenwalze (10a) zu trennen,
eine dritte Trennzahnreihe und eine vierte Trennzahnreihe, die einen Außenumfang der zweiten Schneidklingenwalze (10b) an jeweiligen Positionen berühren, die sich in einer Drehrichtung (R₂) der zweiten Schneidklingenwalze (10b) voneinander unterscheiden, und konfiguriert sind, um die Nudelstränge (3a bis 3d) von der zweiten Schneidklingenwalze (10b) zu trennen,
**gekennzeichnet durch**
ein erstes Rutschenelement (20a) und ein zweites Rutschenelement (20b), die jeweils so bereitgestellt werden, dass sie einer Fallposition eines beliebigen der Nudelstränge, die durch die erste Trennzahnreihe (3a) getrennt werden, der Nudelstränge, die durch die zweite Trennzahnreihe (3b) getrennt werden, der Nudelstränge, die durch die dritte Trennzahnreihe (3c) getrennt werden, und der Nudelstränge, die durch die vierte Trennzahnreihe (3d) getrennt werden, entsprechen, wobei das erste und das zweite Rutschenelement konfiguriert sind, um die Nudelstränge auf den Förderer (500) zu leiten,
wobei die vierte Trennzahnreihe, die dritte Trennzahnreihe, die zweite Trennzahnreihe (42) und die erste Trennzahnreihe (32) in dieser Reihenfolge von einer Seite stromaufwärts zu einer Seite stromabwärts in einer Förderrichtung des Förderers bereitgestellt werden und entweder:
(i) das erste Rutschenelement (20a) und das zweite Rutschenelement (20b) so bereitgestellt werden, dass sie jeweils den Fallpositionen der Nudelstränge, die durch die erste Trennzahnreihe (3a) getrennt werden, und den Fallpositionen der Nudelstränge, die durch die dritte Trennzahnreihe (3c) getrennt werden, entsprechen,
wobei das erste Rutschenelement (20a) und das zweite Rutschenelement (20b) verhindern, dass die Nudelstränge, die durch die erste Trennzahnreihe (3a) getrennt werden, und die Nudelstränge , die durch die dritte Trennzahnreihe (3c) getrennt werden, in der Fortschrittsrichtung des Förderers (500) nach vorn oder nach hinten schwingen, und
wobei die Nudelstränge, die durch die zweite Trennzahnreihe (3b) getrennt werden, und die Nudelstränge, die durch die vierte Trennzahnreihe (3d) getrennt werden, durch ihr eigenes Gewicht fallen, um die Montagefläche des Förderers (500) zu erreichen, und dazu neigen, einer Kraft ausgesetzt zu werden, so dass sie in der Fortschrittsrichtung des Förderers (500) nach vorn und nach hinten schwingen,
oder
(ii) das erste Rutschenelement (20a) und das zweite Rutschenelement (20b) so bereitgestellt werden, dass sie jeweils den Fallpositionen der Nudelstränge, die durch die zweite Trennzahnreihe (3b) getrennt werden, und den Fallpositionen der Nudelstränge , die durch die vierte Trennzahnreihe (3d) getrennt werden, entsprechen,
wobei das erste Rutschenelement (20a) und das zweite Rutschenelement (20b) verhindern, dass die Nudelstränge , die durch die zweite Trennzahnreihe (3b) getrennt werden, und die Nudelstränge, die durch die vierte Trennzahnreihe (3d) getrennt werden, jeweils in der Fortschrittsrichtung des Förderers (500) nach vorn oder nach hinten schwingen, und
wobei die Nudelstränge, die durch die erste Trennzahnreihe (3a) getrennt werden, und die Nudelstränge, die durch die dritte Trennzahnreihe (3c) getrennt werden, durch ihr eigenes Gewicht fallen, um die Montagefläche des Förderers (500) zu erreichen, und dazu neigen, einer Kraft ausgesetzt zu werden, so dass sie in der Fortschrittsrichtung des Förderers (500) nach vorn und nach hinten schwingen.

2. Nudelstrang-Schneidvorrichtung (1) nach Anspruch 1, wobei:
das erste Rutschenelement (20a) und das zweite Rutschenelement (20b) jeweilige Nudelstrang-Berührungsflächen (20a1, 20a2, 20b1, 20b2) umfassen, die im Verhältnis zu der Förderrichtung des Förderers (500) geneigt sind und die Nudelstränge berühren, und
die Nudelstrang-Berührungsfläche des ersten Rutschenelements (20a1, 20a2) und die Nudelstrang-Berührungsfläche des zweiten Rutschenelements (20b1, 20b2) in jeweiligen Richtungen geneigt sind, die sich voneinander unterscheiden oder einander gleich sind.

3. Rohe Nudeln, die durch die Nudelstrang-Schneidvorrichtung (1) nach Anspruch 1 erzeugt werden.

## Revendications

1. Dispositif de coupe de cordons de nouilles (1) configuré pour couper une feuille de pâte (2) en cordons de nouilles (3a à 3d) pour transférer les cordons de nouilles (3a à 3d) à un convoyeur (500) ;
une vitesse de transfert des cordons de nouilles (3a à 3d) par le convoyeur (500) étant inférieure à une vitesse de coupe à laquelle les cordons de nouilles (3a à 3d) sont coupés à partir de la feuille de pâte (2) ;
le dispositif de coupe des cordons de nouilles (1) comprenant :
un premier rouleau à lame de coupe (10a) et un deuxième rouleau à lame de coupe (10b) configurés pour tourner dans des directions opposées (R₁, R₂) dans un état engagé pour couper la feuille de pâte (2) en des cordons de nouilles (3a à 3d) ;
une première rangée de dents de séparation (32) et une deuxième rangée de dents de séparation (42) contactant une périphérie externe du premier rouleau à lame de coupe (10a) au niveau de positions respectives différentes les unes des autres dans une direction de rotation (Ri) du premier rouleau à lame de coupe (10a) et configurées pour séparer les cordons de nouilles (3a à 3d) du premier rouleau à lame de coupe (10a) ;
une troisième rangée de dents de séparation et une quatrième rangée de dents de séparation contactant une périphérie externe du deuxième rouleau à lame de coupe (10b) au niveau de positions respectives différentes les unes des autres dans une direction de rotation (R₂) du deuxième rouleau à lame de coupe (10b) et configurées pour séparer les cordons de nouilles (3a à 3d) du deuxième rouleau à lame de coupe (10b) ;
**caractérisé par**
un premier élément de goulotte (20a) et un deuxième élément de goulotte (20b), agencés chacun de sorte à correspondre à une position de retombée de l'un quelconque des cordons de nouilles séparés par la première rangée de dents de séparation (3 a), des cordons de nouilles séparés par la deuxième rangée de dents de séparation (3b), des cordons de nouilles séparés par la troisième rangée de dents de séparation (3c) et des cordons de nouilles séparés par la quatrième rangée de dents de séparation (3d), les premier et deuxième éléments de goulotte étant configurés pour guider les cordons de nouilles sur le convoyeur (500) ;
dans lequel la quatrième rangée de dents de séparation, la troisième rangée de dents de séparation, la deuxième rangée de dents de séparation (42) et la première rangée de dents de séparation (32) sont agencés dans cet ordre, d'un côté amont vers un côté aval, dans une direction de transfert du convoyeur ; et :
(i) le premier élément de goulotte (20a) et le deuxième élément de goulotte (20b) sont agencés de sorte à correspondre respectivement aux positions de retombée des cordons de nouilles séparés par la première rangée de dents de séparation (3a) et aux positions de retombée des cordons de nouilles séparés par la troisième rangée de dents de séparation (3c) ;
dans lequel le premier élément de goulotte (20a) et le deuxième élément de goulotte (20b) empêchent le basculement vers l'avant ou vers l'arrière de cordons de nouilles séparés par la première rangée de dents de séparation (3a) et des cordons de nouilles séparés par la troisième rangée de dents de séparation (3c), dans la direction d'avance du convoyeur (500) ; et
dans lequel les cordons de nouilles séparés par la deuxième rangée de dents de séparation (3b) et les cordons de nouilles séparés par la quatrième rangée de dents de séparation (3d) retombent par leurs propres poids pour atteindre la surface de montage du convoyeur (500) et tendent à être soumis à une force de sorte à basculer vers l'avant et vers l'arrière dans la direction d'avance du convoyeur (500) ;
ou :
(ii) le premier élément de goulotte (20a) et le deuxième élément de goulotte (20b) sont agencés de sorte à correspondre respectivement aux positions de retombée des cordons de nouilles séparés par la deuxième rangée de dents de séparation (3b) et aux positions de retombée des cordons de nouilles séparés par la quatrième rangée de dents de séparation (3d) ;
dans lequel le premier élément de goulotte (20a) et le deuxième élément de goulotte (20b) empêchent le basculement vers l'avant ou vers l'arrière des cordons de nouilles séparés par la deuxième rangée de dents de séparation (3b) et des cordons de nouilles séparés par la quatrième rangée de dents de séparation (3d), dans la direction d'avance du convoyeur (500) ; et
dans lequel les cordons de nouilles séparés par la première rangée de dents de séparation (3a) et les cordons de nouilles séparés par la troisième rangée de dents de séparation (3c) retombent par leurs propres poids pour atteindre la surface de montage du convoyeur (500) et tendent à être soumis une force de sorte à basculer vers l'avant et vers l'arrière dans la direction d'avance du convoyeur (500).

2. Dispositif de coupe de cordons de nouilles (1) selon la revendication 1, dans lequel :
le premier élément de goulotte (20a) et le deuxième élément de goulotte (20b) comprennent des surfaces respectives contactant les cordons de nouilles (20a1, 20a2, 20b1, 20b2) inclinées par rapport à la direction de transfert du convoyeur (500) et contactant les cordons de nouilles ; et
la surface contactant les cordons de nouilles du premier élément de goulotte (20a1, 20a2) et la surface contactant les cordons de nouilles du deuxième élément de goulotte (20b1, 20b2) sont inclinées dans des directions respectives différentes les unes des autres ou identiques les unes aux autres.

3. Nouilles crues produites par le dispositif de coupe de cordons de nouilles (1) selon la revendication 1.
